# EUROPÄISCHE PATENTSCHRIFT

(11) **EP 1 299 933 B1**
(45) Veröffentlichungstag und Bekanntmachung des Hinweises auf die Patenterteilung: **18.01.2006**
(21) Anmeldenummer: 01942859.8
(22) Anmeldetag: 12.06.2001
(51) Int. Cl.: H02H 11/00

(54) **ELEKTRONISCHE SCHALTUNG FÜR EIN ENERGIEVERSORGUNGSGERÄT, INSBESONDERE FÜR EIN LADEGERÄT FÜR AKKUMULATOREN**
ELECTRONIC CIRCUIT FOR AN ENERGY SUPPLY DEVICE, ESPECIALLY FOR A CHARGING DEVICE FOR BATTERIES
CIRCUIT ELECTRONIQUE POUR APPAREIL D'ALIMENTATION EN ENERGIE, NOTAMMENT POUR CHARGEUR DE BATTERIES

(30) Priorität: 28.06.2000 AT 11112000
(43) Veröffentlichungstag der Anmeldung: 09.04.2003
(73) Patentinhaber: Fronius International GmbH, 4643 Pettenbach (AT)
(72) Erfinder: MÖSENEDER, Josef, A-4654 Bad Wimsbach (AT); TRINKL, Andreas, A-4542 Nussbach (AT)
(74) Vertreter: Secklehner, Günter
(86) Internationale Anmeldenummer: PCT/AT2001/000193
(87) Internationale Veröffentlichungsnummer: WO 2002/001694

(56) Entgegenhaltungen:
- DE-C- 4 031 288

## Beschreibung

Die Erfindung betrifft ein Energieversorgungsgerät sowie ein Verfahren zum Steuern eines Energieversorgungsgerätes, wie in den Ansprüchen 1 und 10 beschrieben.

In der DE 197 56 825 A1 ist eine Verpolschutzschaltung beschrieben, bei der zwischen einer Eingangsklemme und einer Ausgangsklemme ein Schaltelement angeordnet ist, wobei ein Stromfluß nur bei einer bestimmten Polarität der Spannung an der Eingangsklemme erlaubt ist. Das Schaltelement ist bei Anliegen einer bestimmten Polarität an der Eingangsklemme durchgeschaltet und bei falscher Polarität geöffnet bzw. deaktiviert. Nachteilig ist hierbei, daß nur eine eingangsseitige Absicherung durchgeführt wird.

Weiters ist aus der DE 197 17 527 A1 eine elektronische Schaltung mit einem Verpolschutz bekannt, bei der zwischen einer Eingangsquelle, an die eine Gleichspannungsquelle angeschlossen wird, und einem nachfolgenden Schaltungsaufbau ein Schaltelement, insbesondere ein MOS-Feldeffekttransistor, geschaltet ist, wobei das Schaltelement bei angeschlossener Gleichspannungsquelle mit der richtigen Polarität aktiviert ist und bei falscher Polarität deaktiviert ist. Nachteilig ist hierbei, daß wiederum nur eine eingangsseitige Absicherung durchgeführt wird.

Die DE 40 31 288 C1 zeigt eine Schaltungsanordnung zum Schutz gegen Falschpolung, in der ein Feldeffekttransistor (FET) zwischen einer Gleichspannungsversorgungsquelle (Q) und einem Verbraucher (V) in der Plus- oder Minusleitung angeordnet ist Der Gateanschluß des Feldeffekttransistors ist dabei stets über eine Diode (D1) mit dem Gegenpol bzw. der Leitung verbunden, im welchem der Feldeffekttransistor nicht angeordnet ist. Tritt nun der Fall einer Falschpolung auf, fließt über die Diode (D1) ein Ausräumstrom (IA) wodurch die Gatekapazität am FET entladen wird und der Feldeffekttransistor nahezu unverzögert abgeschaltet wird. Wird die Gleichspannungsquelle wieder richtig gepolt, lädt sich die Gatesourcekapazität des Feldeffekttransistors wieder auf, da die Diode D1 nun in Sperrichtung angeordnet ist, worauf die Gatekapazität des FET wieder geladen wird und der Verbraucherstrom IV über diesen fließen kann. Nachteilig ist es hierbei, dass die Schaltungsanordnung ausschließlich für den Schutz gegen Falschpolung eingesetzt werden kann und somit keine weiteren Absicherungsmaßnahmen erreichbar sind.

Der Erfindung liegt die Aufgabe zugrunde, eine elektronische Schaltung für ein Energieversorgungsgerät sowie ein Verfahren zum Steuern einer elektronischen Schaltung für ein Energieversorgungsgerät zu schaffen, bei dem eine ausgangsseitige Absicherung eines Energieversorgungsgerätes, wie beispielsweise ein Verpolschutz, ein Überlastschutz und/oder eine Lasterkennung, durchgeführt wird.

Die Aufgabe der Erfindung wird dadurch gelöst, dass ein Steueranschluß des Schaltelementes mit einem weiteren Schaltelement, an dem das insbesondere negative Potential des Energieversorgungsgerätes schaltbar ist, oder mit einem Steuerausgang einer Steuervorrichtung des Energieversorgungsgerätes verbunden ist und der Steueranschluß weiters mit einem insbesondere positiven Potential einer Versorgungsspannungsquelle verbunden ist, wobei der Schaltzustand des ersten Schaltelementes durch den Schaltzustand des weiteren Schaltelementes bestimmt ist. Vorteilhaft ist hierbei, daß durch einen derartigen Schaltungsaufbau für das Laden eines Akkumulators keine Gegenspannung erforderlich ist und somit vollständig entleerte Akkumulatoren geladen werden können. Ein weiterer Vorteil liegt darin, daß ein derartiges Energieversorgungsgerät nicht nur zum Laden von Akkumulatoren, sondern auch zur Energieversorgung anderer Verbraucher eingesetzt werden kann, da zusätzlich zu dem Verpolschutz auch noch weitere Sicherheitsvorkehrungen, wie ein Überlastschutz und eine Lasterkennung, durchgeführt werden können.

Weitere Merkmale sind in den Ansprüchen 2 bis 9 beschrieben. Die sich daraus ergebenden Vorteile sind der Beschreibung zu entnehmen.

Weiters wird die Aufgabe der Erfindung auch durch die Maßnahmen im Anspruch 10 dadurch gelöst, daß bei Aktivierung des Energieversorgungsgerätes, also beim Anschluß an die Energiequelle auch ohne angeschlossenen Verbraucher das Schaltelement für den Verpolschutz aktiviert wird, daß bei entgegengesetzter (falscher) Polarität an den Ausgangsklemmen ein weiteres, insbesondere zweites Schaltelement aktiviert wird, wodurch die an einem Steueranschluß des ersten Schaltelementes anliegende Spannung gegen das negative Potential gezogen wird und somit das erste Schaltelement gesperrt bzw. deaktiviert wird.

Weitere Maßnahmen sind in den Ansprüchen 11 bis 18 beschrieben. Die sich daraus ergebenden Vorteile sind der Beschreibung zu entnehmen.

Die Erfindung wird anhand von Ausführungsbeispielen näher erläutert.

Es zeigen:
- Fig. 1: einen Schaltungsaufbau einer erfindungsgemäßen elektronischen Schaltung für ein Energieversorgungsgerät in vereinfachter Darstellung;
- Fig. 2: einen weiteren Schaltungsaufbau einer elektronischen Schaltung für ein Energieversorgungsgerät in vereinfachter Darstellung.

Einführend wird festgehalten, daß gleiche Teile bzw. Zustände der einzelnen Ausführungsbeispiele mit gleichen Bezugszeichen versehen werden.

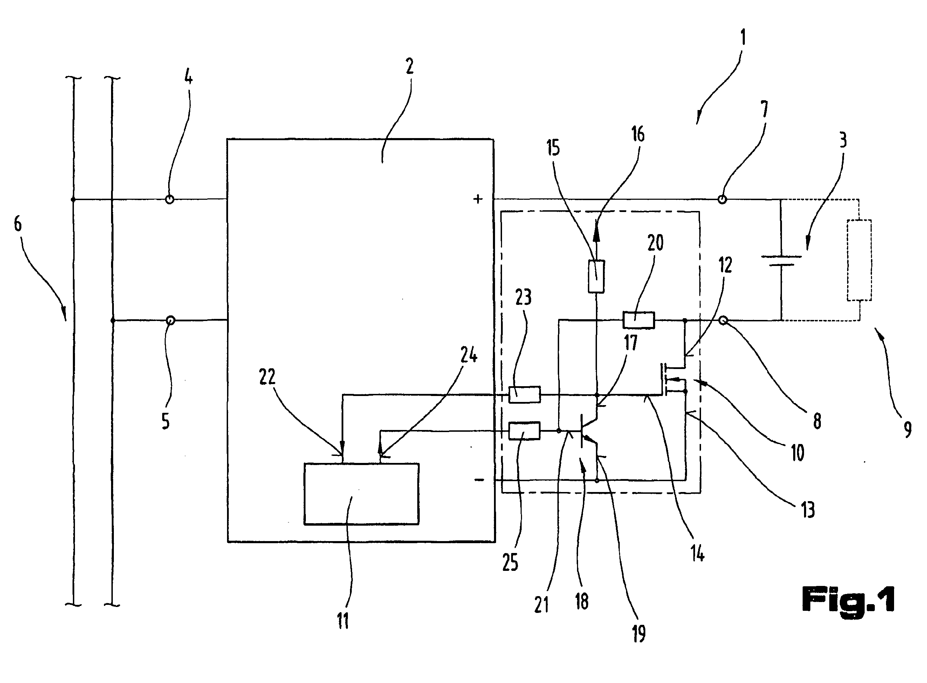

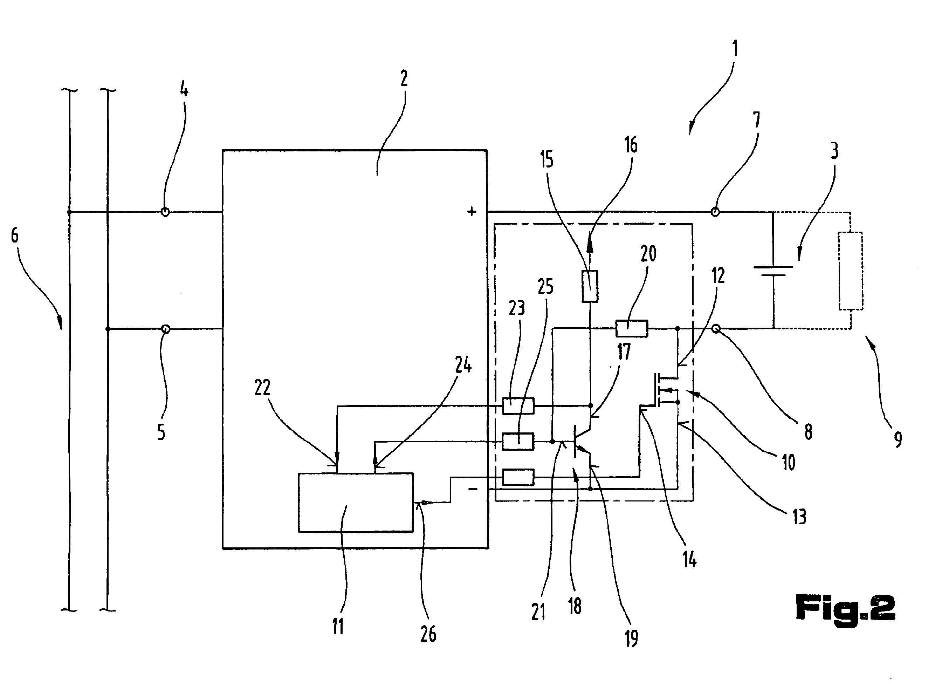

In den Fig. 1 und 2 sind Schaltungsanordnungen einer elektronischen Schaltung für ein Energieversorgungsgerät 1, insbesondere für ein Ladegerät 2 für Akkumulatoren 3, gezeigt. Das Energieversorgungsgerät 1 bzw. das Ladegerät 2 ist symbolisch durch einen einfachen Block dargestellt, wobei der Schaltungsaufbau durch beliebige, aus dem Stand der Technik bekannte Systeme gebildet werden kann. Dabei ist es beispielsweise möglich, daß als Energieversorgungsgerät 1 bzw. als Ladegerät 2 eine Inverterstromquelle oder dgl. eingesetzt werden kann. Grundsätzlich ist zu den Fig. 1 und 2 zu erwähnen, daß der detailliert dargestellte Schaltungsaufbau in dem Energieversorgungsgerät 1 bzw. im Ladegerät 2 angeordnet bzw. integriert ist.

Das Ausführungsbeispiel der Schaltungsanordnung bzw. der elektronischen Schaltung des Energieversorgungsgerätes 1 gemäß Figur 2 dient hierbei lediglich als Beispiel, das das Verständnis der Erfindung erleichtert, jedoch kein Ausfühnmgsbeispiel der Erfindung darstellt

Bei der elektronischen Schaltung für das Energieversorgungsgerät 1, insbesondere für das Ladegerät 2 für Akkumulatoren 3, ist das Energieversorgungsgerät 1 über Eingangsklemmen 4, 5 mit einer Energiequelle 6, insbesondere einem öffentlichen Versorgungsnetz, verbunden. Das Energieversorgungsgerät 1 wandelt die zugeführte Energie von einer beliebigen Spannung, insbesondere einer Wechselspannung, in eine Gleichspannung um und gibt diese umgewandelte Energie, insbesondere die Gleichspannung, über Ausgangsklemmen 7, 8 an einen Verbraucher 9 ab, sodaß eine Energieversorgung des Verbrauchers 9, insbesondere eines ohmschen Verbrauchers 9, wie strichliert dargestellt, ebenso möglich ist, wie eine Ladung eines Akkumulators 3.

Weiters ist zu erwähnen, daß mit der elektronischen Schaltung, welche mit strichpunktierten Linien umrandet ist, mehrere Funktionen, insbesondere ein Verpolschutz, ein Überlastschutz und/oder eine Lasterkennung vom Energieversorgungsgerät 1, durchgeführt werden können. Die einzelnen Funktionen werden anschließend noch näher beschrieben. Bei den nachstehend beschriebenen Figuren wird der Aufbau der elektronischen Schaltung auf ein Potential, insbesondere auf das negative Potential, bezogen, wobei jedoch auch eine Anwendung für ein anderes Potential, insbesondere das positive Potential, möglich ist.

Gemäß Fig. 1 ist zwischen zumindest einer Ausgangsklemme 7 oder 8, insbesondere der Ausgangsklemme 8 für das negative Potential, und einem insbesondere negativen Potential des Energieversorgungsgerätes 1 für den Verbraucher 9 ein Schaltelement 10 angeordnet, wobei bei Anliegen einer bestimmten Polarität, insbesondere der negativen Polarität, an dieser Ausgangsklemme 8 das Schaltelement 10 durchgeschaltet ist und bei entgegengesetzter (falscher) Polarität, also bei positiver Polarität dieses abgeschaltet ist, wobei die Schaltfunktion von der elektronischen Schaltung und/oder einer Steuervorrichtung 11 des Energieversorgungsgerätes 1 selbständig durchgeführt wird, wie dies nachstehend noch beschrieben wird. Die Ausgangsklemmen 7, 8 sind durch das Energieversorgungsgerät 1 von den Eingangsklemmen 4, 5 des Energieversorgungsgerätes 1, insbesondere von der Energiequelle 6, getrennt, sodaß die einzelnen möglichen Funktionen, insbesondere der Verpolschutz, der Überlastschutz und/oder die Lasterkennung, auf den Ausgangsbereich bezogen sind.

Mit der Ausgangsklemme 8 für das bevorzugt negative Potential ist ein Anschluß 12, insbesondere ein Drain-Anschluß, des Schaltelementes 10, insbesondere eines MOS-Feldeffekttransistors, verbunden. Ein weiterer Anschluß 13, insbesondere ein Source-Anschluß, des Schaltelementes 10 ist mit dem negativen Potential verbunden. Die Durchschaltstrecke, insbesondere die Drain-Source Strecke, des Schaltelementes 10 ist also zwischen der Ausgangsklemme 8 und dem insbesondere negativen Potential des Energieversorgungsgerätes 1 geschaltet, wobei bei Anliegen einer bestimmten Polarität an der Ausgangsklemme 8 die Durchschaltstrecke durchgeschaltet ist, wogegen bei entgegengesetzter (falscher) Polarität an der Ausgangsklemme 8 die Durchschaltstrecke abgeschaltet ist.

Ein Steueranschluß 14, insbesondere ein Gate-Anschluß, des Schaltelementes 10 ist über bevorzugt einen Widerstand 15 mit einer Spannung, insbesondere einer positiven Versorgungsspannung 16, wie schematisch dargestellt, verbunden. Dabei ist es möglich, daß diese Verbindung derart ausgebildet werden kann, daß der Steueranschluß 14 beispielsweise mit einer Ausgangsspannung des Energieversorgungsgerätes 1, insbesondere der Ausgangsklemme 7, oder einer Spannung einer unabhängigen Energiequelle verbunden wird. Wesentlich ist hierbei, daß der Steueranschluß 14 mit einer dauerhaften Spannung, die über kein Schaltelement unterbrochen wird, beaufschlagt bzw. versorgt wird, d.h., daß der Steueranschluß 14 des Schaltelementes 10 kontinuierlich mit einer bevorzugt positiven Spannung versorgt wird. Dadurch wird erreicht, daß durch Anliegen dieser Spannung am Steueranschluß 14 das Schaltelement 10 selbständig aktiviert wird, d.h., daß bei Anliegen bzw. bei Aktivierung dieser Spannung, insbesondere der Versorgungsspannung 16, das Schaltelement 10 aktiviert wird, ohne daß dabei ein Verbraucher 9 an den Ausgangsklemmen 7,8 angeschlossen sein muß.

Weiters ist der Steueranschluß 14, insbesondere der Gate-Anschluß, des Schaltelementes 10 mit einem Anschluß 17, insbesondere einem Kollektor-Anschluß, eines weiteren Schaltelementes 18, insbesondere eines Transistors, verbunden. Ein weiter Anschluß 19, insbesondere ein Emitter-Anschluß, des zweiten Schaltelementes 18 ist mit dem negativen Potential verbunden. Die Durchschaltstrecke, insbesondere die Kollektor-Emitter Strecke, des weiteren Schaltelementes 18 ist also zwischen dem Steueranschluß 14, insbesondere dem Gate-Anschluß, des ersten Schaltelementes 10 und dem bevorzugt negativen Potential angeordnet.

Der Anschluß 12, insbesondere der Drain-Anschluß, des ersten Schaltelementes 10 ist mit der Ausgangsklemme 8 und bevorzugt über einen Widerstand 20 mit einem Steueranschluß 21, insbesondere einem Basis-Anschluß, des zweiten Schaltelementes 18 verbunden, sodaß eine entsprechende Spannung zum Aktivieren des weiteren Schaltelementes 18 von der Ausgangsklemme 8 an den Steueranschluß 21 des weiteren Schaltelementes 18 indiziert werden kann. Der Steueranschluß 21, insbesondere der Basis-Anschluß, ist weiters mit der Steuervorrichtung 11 des Energieversorgungsgerätes 1, insbesondere mit einem Ausgang, verbunden, wobei die Steuervorrichtung 11 schematisch durch einen Block dargestellt ist und bevorzugt durch eine Mikroprozessorsteuerung gebildet wird. Der Steueranschluß 14, insbesondere der Gate-Anschluß, des ersten Schaltelementes 10 oder der Anschluß 17, insbesondere der Kollektor-Anschluß, des zweiten Schaltelementes 18 ist ebenfalls mit der Steuervorrichtung 11, insbesondere mit einem Eingang der Steuervorrichtung 11, verbunden.

Wesentlich ist bei der erfindungsgemäßen elektronischen Schaltung, daß das erste Schaltelement 10 bei der Inbetriebnahme des Energieversorgungsgerätes 1 auch ohne angeschlossenen Verbraucher 9, insbesondere dem Akkumulator 3, aktiviert wird. Dies ist insofern möglich, da der Steueranschluß 14 des ersten Schaltelementes 10 mit einer dauerhaften Spannung beaufschlagt wird, sodaß nach Aufbau dieser Spannung eine selbständige Aktivierung des ersten Schaltelementes 10 zustande kommt.

Aufgrund des Aufbaus wird auch erreicht, daß das Schaltelement 10 bei Anschluß des Verbrauchers 9, insbesondere des Akkumulators 3, mit bestimmter Polarität an den Ausgangsklemmen 7, 8 auch ohne angeschlossener Energiequelle 6 an den Eingangsklemmen 4, 5 oder der angelegten Spannung an dem Gate-Anschluß aktiviert ist, wenn der Steueranschluß 14 des ersten Schaltelementes 10 anstelle der Versorgungsspannung 16 mit der Ausgangsspannung, insbesondere mit der weiteren Ausgangsklemme 7, verbunden ist, da dadurch eine entsprechende Akkumulatorspannung an den Steueranschluß 14 des ersten Schaltelementes 10 angelegt wird. Somit wirkt die elektronische Schaltung, insbesondere der Verpolschutz, auch ohne einer Energiequelle 6 an den Eingangsklemmen 4, 5, wodurch eine Zerstörung der Bauelemente durch einen falsch angeschlossenen Akkumulator 3 an den Ausgangsklemmen 7, 8 bei nicht in Betrieb genommenem Energieversorgungsgerät 1 verhindert wird.

Nachstehend wird das Funktionsprinzip bzw. das Verfahren zum Steuern der elektronischen Schaltung für das Energieversorgungsgerät 1, insbesondere für das Ladegerät 2 für Akkumulatoren 3, beschrieben. Wie zuvor bereits erwähnt, wird das Energieversorgungsgerät 1 über Eingangsklemmen 4, 5 mit der Energiequelle 6 verbunden, wobei das Energieversorgungsgerät 1 die gelieferte Energie von einer beliebigen Spannung, insbesondere einer Wechselspannung, in eine Gleichspannung umwandelt und diese umgewandelte Energie über Ausgangsklemmen 7, 8, die von den Eingangsklemmen 4, 5 durch Bauelemente, wie beispielsweise Dioden oder einen Transformator usw., getrennt sind, an den Verbraucher 9, insbesondere den Akkumulator 3, abgibt. Bei der Aktivierung des Energieversorgungsgerätes 1, also beim Anschluß an die Energiequelle 6 bzw. durch Einschalten des Energieversorgungsgerätes 1, wird das Schaltelement 10 zwischen der Ausgangsklemme 8 und dem bevorzugt negativen Potential einer Spannung, insbesondere der Versorgungsspannung 16 oder einer Ausgangsspannung des Energieversorgungsgerätes 1 oder durch eine unabhängige Spannung, aktiviert, wodurch eine elektrische Verbindung zwischen dieser Ausgangsklemme 8 und dem bevorzugt negativen Potential hergestellt wird. Durch diesen Verbindungsaufbau der Ausgangsklemme 8 mit einem Potential, insbesondere dem negativen Potential, können nunmehr die bereits zuvor erwähnten Funktionen, insbesondere der Verpolschutz, der Überlastschutz und/oder die Lasterkennung durchgeführt werden, da über die beiden Ausgangsklemmen 7, 8 ein Stromkreis vom Energieversorgungsgerät 1 aufgebaut werden kann.

Der Verpolschutz wird derartig durchgeführt, daß beim Anlegen einer Fremdspannungsquelle an die Ausgangsklemmen 7, 8 mit bestimmter, insbesondere negativer Polarität an der Ausgangsklemme 8, wie beispielsweise durch Anschluß des Akkumulators 3, das Schaltelement 10 durchgeschaltet bleibt, wogegen beim Anlegen der Fremdspannungsquelle, insbesondere des Akkumulators 3, mit entgegengesetzter, insbesondere positiver Polarität an der Ausgangsklemme 8 das Schaltelement 10 abgeschaltet bzw. deaktiviert wird. Dies erfolgt derartig, daß bei entgegengesetzter (falscher) Polarität an den Ausgangsklemmen 7 und 8 das weitere, insbesondere zweite Schaltelement 18 aktiviert wird, wodurch die an dem Steueranschluß 14 des ersten Schaltelementes 10 anliegende bzw. zugeführte Spannung, insbesondere die Versorgungsspannung 16, gegen das negative Potential gezogen wird und somit das erste Schaltelement 10 gesperrt bzw. deaktiviert wird, d.h., daß aufgrund der entgegengesetzten (falschen) Polarität, in diesem Fall die positive Polarität, an der Ausgangsklemme 8 die zugeführte Spannung über die Leitungsverbindung zwischen der Ausgangsklemme 8 und dem Steueranschluß 21 des weiteren Schaltelementes 18 diesem zugeführt wird, sodaß das weitere Schaltelement 18 aktiviert bzw. durchgeschaltet wird, wodurch das erste Schaltelement 10 durch die aufgebaute Verbindung zwischen dem Steueranschluß 14 und dem negativen Potential deaktiviert wird.

Das erste Schaltelement 10 bleibt so lange deaktiviert, bis das Anliegen der entgegengesetzten (falschen) Polarität der Fremdspannung des Akkumulators 3 an den Ausgangsklemmen 7, 8 unterbrochen wird, sodaß damit ebenfalls die Spannungsversorgung an dem Steueranschluß 21 des weiteren Schaltelementes 18 unterbrochen wird, wodurch das weitere Schaltelement 18 wieder sperrt bzw. deaktiviert wird und sich die zugeführte Spannung, insbesondere die Versorgungsspannung 16, am Steueranschluß 14 des ersten Schaltelementes 10 wieder aufbauen kann, sodaß ein selbständiges Aktivieren des ersten Schaltelementes 10 durchgeführt wird.

Grundsätzlich ist zu erwähnen, daß an den Ausgangsklemmen 7, 8 nicht nur Akkumulatoren 3 angeschlossen werden können. Selbstverständlich ist es möglich, daß beispielsweise ein ohmscher Widerstand oder andere Schaltungsaufbauten angeschlossen werden, die vom Energieversorgungsgerät 1 mit Energie versorgt werden sollen. Wird jedoch kein Akkumulator 3 bzw. keine Fremdspannungsquelle angeschlossen, so kann kein Verpolschutz durchgeführt werden, wodurch von der elektronischen Schaltung nur mehr die Funktionen Überlastschutz und/oder Lasterkennung durchgeführt werden.

Der Überlastschutz bewirkt, daß ein zu hoher Stromfluß über das erste Schaltelement 10, was zur Zerstörung des Schaltelementes 10 führen kann, verhindert wird. Bei einem Akkumulator 3 kann ein derartig hoher Stromfluß dann auftreten, wenn dieser vollständig bzw. fast vollständig entleert ist.

Für den Überlastschutz, also bei Verbinden eines leeren bzw. fast leeren Akkumulators 3 oder eines anderen Verbrauchers 9 mit hoher Stromaufnahme mit den Ausgangsklemmen 7, 8, wird das erste Schaltelement 10 auch bei bestimmter (richtiger) Polarität des Verbrauchers 9 bzw. des Akkumulators 3 durch das zweite Schaltelement 18 deaktiviert. Dies erfolgt derartig, daß aufgrund eines zu hohen Stromflusses eine entsprechende Spannung über den Widerstand 20 an den Steueranschluß 21 des weiteren Schaltelementes 18 indiziert wird, sodaß bei Überschreiten eines definierten Pegels das weitere Schaltelement 18 aktiviert wird, wodurch, wie zuvor für den Verpolschutz beschrieben, das erste Schaltelement 10 deaktiviert wird. Die Definition des zugelassenen Stromflusses über das erste Schaltelement 10 kann aufgrund der Dimensionierung des Widerstandes 20 in der Leitungsverbindung zum Steueranschluß 21 des zweiten Schaltelements 18 und durch Dimensionierung des Schaltelementes 10 erfolgen.

Bei der Funktion für den Überlastschutz bei Verwendung eines Akkumulators 3 als Verbraucher 9 wird das erste Schaltelement 10 periodisch ein- und ausgeschaltet, bis der sich einstellende Stromfluß über das erste Schaltelement 10 unter einen definierten Wert absinkt und somit die Spannungsindizierung auf den Steueranschluß 21 des weiteren Schaltelementes 18 ebenfalls unter einen vordefinierten Wert absinkt, sodaß eine Aktivierung des weiteren Schaltelementes 18 verhindert wird. Das periodische Ein- und Ausschalten des ersten Schaltelementes 10 wird deshalb durchgeführt, da bei jeder Aktivierung des ersten Schaltelementes 10 der angeschlossene leere bzw. fast leere Akkumulator 3 kurzzeitig geladen wird, sodaß sich mit der Zeit die Stromhöhe verringert und somit eine dauerhafte Ladung durchgeführt werden kann.

Damit jedoch ein periodisches Ein- und Ausschalten durchgeführt werden kann, muß die Steuervorrichtung 11 entsprechend eingreifen, d.h., daß von der Steuervorrichtung 11 bewußt das zweite Schaltelement 18 deaktiviert wird, sodaß das erste Schaltelement 10 wiederum aktiviert wird. Dazu ist es jedoch erforderlich, daß die Steuervorrichtung 11 den Zustand des ersten und zweiten Schaltelementes 10 und 18 erkennt. Dies wird derartig erreicht, daß ein Steuereingang 22 der Schaltvorrichtung 11 bevorzugt über einen Widerstand 23 mit dem Steueranschluß 14 des ersten Schaltelementes 10 bzw. mit dem Kollektor-Anschluß des zweiten Schaltelementes 18 gekoppelt wird, wodurch bei Aktivierung des zweiten Schaltelementes 18 die an dem Steueranschluß 14 des ersten Schaltelementes 10 anliegende Spannung, insbesondere die Versorgungsspannung 16, gegen das bevorzugt negative Potential gezogen wird und somit am Steuereingang 22 der Steuervorrichtung 11 ein High- oder Low-Signal entsteht bzw. erzeugt werden kann. Dadurch kann die Steuervorrichtung 11 für alle Funktionen, also auch für den Verpolschutz und/oder der Lasterkennung, den Zustand der Schaltelemente 10 und 18 erkennen. Durch einen derartigen Aufbau der elektronischen Schaltung kann die Erkennung der beiden Schaltzustände der Schaltelemente 10 und 18 mit nur einem Signal, insbesondere mit einem High- oder Low-Signal, erfolgen, da die beiden Schaltelemente 10 und 18 immer gegengleich geschaltete werden, d.h., daß bei aktiviertem zweiten Schaltelement 18 das erste Schaltelement 10 deaktiviert ist oder umgekehrt.

Damit die Steuervorrichtung 11 das zweite Schaltelement 18 ansteuern kann, ist die Steuervorrichtung 11 mit einem Steuerausgang 24 bevorzugt über einen Widerstand 25 mit dem Steueranschluß 21 des zweiten Schaltelementes 18 verbunden. Über diese Verbindung kann die Steuervorrichtung 11 steuernd in die elektronische Schaltung eingreifen, wobei von ihr das zweite Schaltelement 18 durch Beaufschlagen des Steueranschlusses 21 mit einem Signal gesteuert wird. Dies kann beispielsweise derartig erfolgen, daß bei deaktiviertem ersten Schaltelement 10 nach Ablauf einer voreinstellbaren Zeitdauer von der Steuervorrichtung 11 des Energieversorgungsgerätes 1 das zweite aktivierte Schaltelement 18 durch Aussendung eines negativen Signals deaktiviert wird, wodurch über die zugeführte Spannung an dem Steueranschluß 14 des ersten Schaltelementes 10 das erste Schaltelement 10 wieder automatisch aktiviert wird. Dieser Schaltvorgang kann von der Steuervorrichtung 11 beliebig oft wiederholt werden, sodaß ein periodisches Ein- und Ausschalten des ersten Schaltelementes 10 realisiert werden kann. Selbstverständlich ist es möglich, daß nach vordefinierten Schaltvorgängen von der Steuervorrichtung 11 kein weiterer Schaltvorgang eingeleitet wird und ein Störsignal ausgegeben wird.

Um eine Lasterkennung durchführen zu können, wird von der Steuervorrichtung 11 selbständig eine Steuerung der Schaltelemente 10 und 18, insbesondere des zweiten Schaltelementes 18, vorgenommen. Dabei wird für die Lasterkennung zuerst von der Steuervorrichtung 11 das erste Schaltelement 10 durch Aktivieren des zweiten Schaltelementes 18 deaktiviert, worauf nach Ablauf einer voreinstellbaren Zeitdauer die Ansteuerung des zweiten Schaltelementes 18 aufgehoben wird, wobei bei angeschlossenem Verbraucher 9 eine Spannung auf den Steueranschluß 21 des zweiten Schaltelementes 18 indiziert wird, wodurch das erste Schaltelement 10 aufgrund der Selbsthaltefunktion durch die Indizierung der Spannung auf den Steueranschluß 21 deaktiviert bleibt. Dies wird von der Steuervorrichtung 11 über den Steuereingang 22 erkannt, sodaß diese daraus schließen kann, daß ein Verbraucher 9 angeschlossen ist. Bei einem derartigen Vorgehen ist es möglich, daß als Verbraucher 9 beispielsweise ein ohmscher Widerstand oder andere Schaltgruppen bzw. Geräte angeschlossen sind.

Damit von der Steuervorrichtung 11 ein Akkumulator 3 an den Ausgangsklemmen 7, 8 erkannt werden kann, wird zu dem zuvor beschriebenen Vorgehen noch ein weiterer Steuervorgang notwendig. Dies ist deshalb notwendig, da bei Anschluß eines Akkumulators 3 mit der gleichen Spannungshöhe, wie der Ausgangsspannung des Energieversorgungsgerätes 1, keine Spannungsinduzierung über den Widerstand 20 auf den Steueranschluß 21 des weiteren Schaltelementes 18 und somit keine Selbsthaltefunktion zustande kommt.

Für eine derartige Lasterkennung, insbesondere der Erkennung eines Akkumulators 3, wird von der Steuervorrichtung 11 während dem Deaktivieren des ersten Schaltelementes 10 die Ausgangsspannung an den Ausgangsklemmen 7, 8 von dem Energieversorgungsgerät 1 um einen Betrag, insbesondere zwischen I V bis 5V, erhöht, worauf von der Steuervorrichtung 11 die Ansteuerung des zweiten Schaltelementes 18 aufgehoben wird, wodurch nunmehr bei angeschlossenem Akkumulator 3 aufgrund des Spannungsunterschiedes zwischen der Akkumulatorspannung und der Ausgangsspannung des Energieversorgungsgerätes 1 eine Spannungsindizierung an dem Steueranschluß 21 des zweiten Schaltelementes 18 erreicht wird bzw. entsteht und somit das zweite Schaltelement 18 aufgrund der Selbsthaltefunktion, wie zuvor beschrieben, aktiviert bleibt, sodaß dies von der Steuervorrichtung 11 wiederum über den Steuereingang 22 erkannt wird.

Zu den zuvor beschriebenen Funktionsprinzipen kann gesagt werden, daß der Verpolschutz unabhängig von Einflüssen durch die Steuervorrichtung 11 durchgeführt wird, wogegen für den Überlastschutz und/oder der Lasterkennung von der Steuervorrichtung 11 entsprechende Steuereingriffe vorgenommen werden, wobei diese Funktionen jeweils nach der Inbetriebnahme des Energieversorgungsgerätes 1 und/oder nach Ablauf einer beliebigen Zeitdauer während eines Betriebes durchgeführt bzw. wiederholt werden.

In Fig. 2 ist ein weiterer Aufbau der elektronischen Schaltung dargestellt. Die elektronische Schaltung gemäß Fig. 2 dient dabei lediglich als Beispiel, das das Verständnis der Erfindung erleichtert.

Der Unterschied zum Aufbau gemäß Fig. 1 liegt darin, daß nunmehr der Steueranschluß 14 des ersten Schaltelementes 10 direkt mit einem Steuerausgang 26 der Steuervorrichtung 11 verbunden wird, wobei die Leitungsverbindung, gemäß Fig. 1, zum weiteren Schaltelement 18 und somit zur Versorgungsspannung 16 bzw. zur Ausgangsspannung des Energieversorgungsgerätes 1 unterbrochen wurde.

Damit die Funktion, insbesondere der Verpolschutz, der Überlastschutz und/oder die Lasterkennung, vom Energieversorgungsgerät 1 durchgeführt werden können, muß nunmehr die Steuerung des Schaltelementes 10 von der Steuervorrichtung 11 aus erfolgen, d.h., daß, entsprechend dem Funktionsablauf, wie er in Fig. 1 beschrieben ist, die Steuervorrichtung 11 das Schaltelement 10 bei aktiviertem Schaltelement 18 deaktiviert oder umgekehrt. Eine derartige Steuerung über die Steuervorrichtung 11 ist insofern möglich, da die Steuervorrichtung 11 über den Steuereingang 22 den Zustand des zweiten Schaltelementes 18 erkennen kann und somit von der Steuervorrichtung 11 eine gegengleiche Ansteuerung des ersten Schaltelementes 10 vornehmen kann.

Der Ordnung halber sei abschließend darauf hingewiesen, daß zum besseren Verständnis des Fnergieversorgungsgerätes 1 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Energieversorgungsgerät
- 2: Ladegerät
- 3: Akkumulator
- 4: Eingangsklemme
- 5: Eingangsklemme

- 6: Energiequelle
- 7: Ausgangsklemme
- 8: Ausgangsklemme
- 9: Verbraucher
- 10: Schaltelement

- 11: Steuervorrichtung
- 12: Anschluß
- 13: Anschluß
- 14: Steueranschluß
- 15: Widerstand

- 16: Versorgungsspannung
- 17: Anschluß
- 18: Schaltelement
- 19: Anschluß
- 20: Widerstand

- 21: Steueranschluß
- 22: Steuereingang
- 23: Widerstand
- 24: Steuerausgang
- 25: Widerstand

- 26: Steuerausgang

## Patentansprüche

1. Energieversorgungsgerät (1), insbesondere Ladegerät (2), bevorzugt für Akkumulatoren (3) bzw. Fremdspannungsquellen, das über Eingangsklemmen (4, 5) mit einer Energiequelle (6) verbunden ist und die zugeführte Energie von einer beliebigen Spannung, insbesondere einer Wechselspannung, in eine Gleichspannung umwandelt und diese umgewandelte Energie über Ausgangsklemmen (7, 8) an einen damit verbindbaren Verbraucher (9), insbesondere den Akkumulator (3), abgibt, wobei für einen Verpolschutz ein erstes Schaltelement (10) angeordnet ist, welches mit einer Ausgangsklemme (8) und einem negativen Potential des Energieversorgungsgerätes (1) verbunden ist, und daß bei Anliegen einer richtigen, negativen Polarität der Fremdspannungsquelle an der Ausgangsklemme (8) über das erste Schaltelement (10) eine Verbindung zwischen der Ausgangsklemme (8) und dem negativen Potential des Energieversorgungsgerätes (1) geschaltet ist und bei Anliegen einer falschen, positiven Polarität der Fremdspannungsquelle an der Ausgangsklemme (8) diese Verbindung über das erste Schaltelement (10) unterbrochen ist, **dadurch gekennzeichnet, daß** der Steueranschluß (14), insbesondere Gate-Anschluß, des ersten Schaltelementes (10) mit einem Anschluß (17), insbesondere Kollektor-Anschluß, eines weiteren Schaltelementes (18), an den das negative Potential des Energieversorgungsgerätes (1) anschaltbar ist, verbunden ist und daß der Steueranschluß (14) des ersten Schaltelementes (10) mit einem Steuereingang (22) einer Steuervorrichtung (11) des Energieversorgungsgerätes (1) verbunden ist und daß der Steueranschluß (14) des ersten Schaltelementes (10) mit einem, insbesondere positiven Potential einer Versorgungsspannungsquelle (16), bevorzugt über einen Widerstand (15), verbunden ist, sodaß im Falle einer falschen, positiven Polarität an der Ausgangsklemme (8) oder eines zu hohen Stromflusses über eine Leitungsverbindung, insbesondere einen Widerstand (20), zwischen der Ausgangsklemme (8) und einem Steueranschluß (21) des weiteren Schaltelementes (18) das weitere Schaltelement (18) durch die zugeführte Spannung aktiviert wird bzw. bleibt, wodurch das erste Schaltelement (10) aufgrund der über das weitere Schaltelement (18) durchgeschalteten Verbindung zwischen der Versorgungsspannungsquelle (16) und dem negativen Potential des Energieversorgungsgerätes (1) deaktiviert wird bzw. bleibt und somit der Schaltzustand des ersten Schaltelementes (10) durch den Schaltzustand des weiteren Schaltelementes (18) bestimmt ist, und dass außerdem zur Ansteuerung des weiteren Schaltelementes (18) ein Steuerausgang (24) der Steuervorrichtung (11) mit dem Steueranschluß (21), insbesondere Basis-Anschluß, des weiteren Schaltelementes (18) verbunden ist.

2. Energieversorgungsgerät nach Anspruch 1, **dadurch gekennzeichnet, daß** die Versorgungsspannungsquelle (16) durch das positive Potential, insbesondere der Ausgangsklemme (7), des Energieversorgungsgerätes (1) gebildet ist

3. Energieversorgungsgerät nach Anspruch 1 oder 2, **dadurch gekennzeichnet, daß** die Versorgungsspannungsquelle (16) durch eine Ausgangsspannung des Energieversorgungsgerätes (1) gebildet ist.

4. Energieversorgungsgerät nach einem oder mehreren der vorhergehenden Ansprüche, **dadurch gekennzeichnet, daß** die Versorgungsspannungsquelle (16) durch eine Spannung einer vom Energieversorgungsgerät (1) unabhängigen Energiequelle gebildet ist.

5. Energieversorgungsgerät nach einem oder mehreren der vorhergehenden Ansprüche, **dadurch gekennzeichnet, daß** ein Anschluß (12), insbesondere der Drain-Anschluß, des ersten Schaltelementes (10) mit der Ausgangsklemme (8) und bevorzugt über einen Widerstand (20) mit einem Steueranschluß (21), insbesondere einem Basis-Anschluß, des zweiten Schaltelementes (18) verbunden ist.

6. Energieversorgungsgerät nach einem oder mehreren der vorhergehenden Ansprüche, **dadurch gekennzeichnet, daß** der SteueranschluB (14), insbesondere der Gute-Anschluß, des ersten Schaltelementes (10) und/oder ein Anschluß (17), insbesondere ein Kollektor-Anschluß, des zweiten Schaltelementes (18) mit der Steuervorrichtung (11) verbunden ist.

7. Energieversorgungsgerät nach einem oder mehreren der vorhergehenden Ansprüche, **dadurch gekennzeichnet, daß** der Steueranschluß (14) des ersten Schaltelementes (10) mit der Spannungsquelle verbunden ist und von dieser, insbesondere dauerhaft, mit einer Spannung beaufschlagt wird, wodurch das Schaltelement (10) bei der Inbetriebnahme des Energieversorgungsgerätes (1) auch ohne angeschlossenen Verbraucher (9) aktiviert ist.

8. Energieversorgungsgerät nach einem oder mehreren der vorhergehenden Ansprüche, **dadurch gekennzeichnet, daß** der Steueranschluß (14) des ersten Schaltelementes (10) mit der Ausgangsklemme (7) und somit der an dieser anliegenden Ausgangsspannung verbunden ist, wodurch das Schaltelement (10) bei Anschluß eines Verbrauchers (9), insbesondere des Akkumulators (3), an den Ausgangsklemmen (7, 8) mit richtiger Polarität auch ohne angeschlossener Energiequelle (6) an den Eingangsklemmen (4, 5) aktiviert ist.

9. Energieversorgungsgerät nach einem oder mehreren der vorhergehenden Ansprüche, **dadurch gekennzeichnet, daß** der Aufbau der elektronischen Schaltung des Energieversorgungsgerätes (1) alternativ für eine auf das positive Potential bezogene Verwendung, insbesondere der Ausgangsklemme (7), ausgebildet ist.

10. Verfahren zum Steuern eines Energieversorgungsgerätes (1), insbesondere Ladegerätes (2), bevorzugt für Akkumulatoren (3) bzw. Fremdspannungsquellen, bei dem das Energieversorgungsgerät (1) von einer Energiequelle (6) über Eingangsklemmen (4, 5) mit Energie versorgt wird, wobei das Energieversorgungsgerät (1) die zugeführte Energie von einer beliebigen Spannung, insbesondere einer Wechselspannung, in eine Gleichspannung umwandelt und diese umgewandelte Energie über Ausgangsklemmen (7, 8) an einen mit diesen verbindbaren Verbraucher (9), insbesondere den Akkumulator (3), abgibt, und daß für einen Verpolschutz des Energieversorgungsgerätes (1) zumindest ein erstes Schaltelement (10) eingesetzt wird und das bei Anlegen des Verbrauchers (9), insbesondere des Akkumulators (3), mit einer richtigen, negativen Polarität der Fremdspannungsquelle an der Ausgangsklemme (8) eine Verbindung zwischen der Ausgangsklemme (8) und dem negativen Potential des Energieversorgungsgerätes (1) über das erste Schaltelement (10) durchgeschaltet bleibt oder durchgeschaltet wird, wogegen beim Anlegen des Verbrauchers (9), insbesondere des Akkumulators (3), mit einer falschen, positiven Polarität der Fremdspannungsquelle an die Ausgangsklemme (8) diese Verbindung über das erste Schaltelement (10) abgeschaltet bzw. deaktiviert wird, **dadurch gekennzeichnet, daß** bei Aktivierung des Energieversorgungsgerätes (1), also beim Anschluß an die Energiequelle (6) auch ohne angeschlossenen Verbraucher (9) das erste Schaltelement (10) für den Verpolschutz aktiviert wird, daß bei falscher, positiver Polarität an der Ausgangsklemme (8) oder eines zu hohen Stromflusses über eine Leitungsverbindung, insbesondere einem Widerstand (20), zwischen der Ausgangsklemme (8) und einem Steueranschluß (21) eines weiteren Schaltelementes (18), das weitere Schaltelement (18) durch die zugeführte Spannung aktiviert wird bzw. bleibt, wodurch die an einem Steueranschluß (14) des ersten Schaltelementes (10) anliegende Versorgungsspannung (16) durch das weitere Schaltelement (18) gegen das negative Potential des Energieversorgungsgerätes (1) gezogen wird und somit das erste Schaltelement (10) gesperrt bzw. deaktiviert wird.

11. Verfahren nach Anspruch 10, **dadurch gekennzeichnet, daß** ein Verpolschutz, ein Überlastschutz und eine Lasterkennung vom Energieversorgungsgerät (1) durchgefiihrt wird.

12. Verfahren nach Anspruch 10 oder 11, **dadurch gekennzeichnet, daß** beim Überlastschutz bei richtiger Polarität des Verbrauchers (9) an den Ausgangsklemmen (7, 8) und zu hohem Stromfluß über das erste Schaltelement (10) dieses durch das zweite Schaltelement (18) deaktiviert wird.

13. Verfahren nach einem oder mehreren der vorhergehenden Ansprüche, **dadurch gekennzeichnet, daß** bei der Funktion für den Überlastschutz das erste Schaltelement (10) periodisch ein- und ausgeschaltet wird, bis der sich einstellende Stromfluß über das erste Schaltelement (10) unter einen definierten Wert absinkt und somit die Spannungsindizienuig auf einen Steueranschluß (21), insbesondere über den Widerstand (20), des weiteren Schaltelementes (18) ebenfalls unter einen vordefinierten Wert absinkt, sodaß eine Aktivierung des weiteren Schaltelementes (18) verhindert wird.

14. Verfahren nach einem oder mehreren der vorhergehenden Ansprüche, daß bei deaktiviertem ersten Schaltelement (10) nach Ablauf einer voreinstellbaren Zeitdauer von einer Steuervorrichtung (11) des Energieversorgungsgerätes (1) das weitere aktivierte Schaltelement (18) deaktiviert wird, wodurch über die zugeführte Spannung das erste Schaltelement (10) wieder automatisch aktiviert wird.

15. Verfahren nach einem oder mehreren der vorhergehenden Ansprüche, **dadurch gekennzeichnet, daß** für die Lasterkennung zuerst von der Steuervorrichtung (11) das erste Schaltelement (10) durch das Aktivieren des zweiten Schaltelementes (18) deaktiviert wird, worauf nach Ablauf einer voreinstellbaren Zeitdauer die Ansteuerung des zweiten Schaltelementes (18) aufgehoben wird, wobei bei angeschlossenem Verbraucher (9) eine Spannung auf den Steueranschluß (21) des zweiten Schaltelementes (18) indiziert wird, wodurch das erste Schaltelement (10) aufgrund der Selbsthaltefunktion deaktiviert bleibt und dies von der Steuervorrichtung (11) erkannt wird.

16. Verfahren nach einem oder mehreren der vorhergehenden Ansprüche, **dadurch gekennzeichnet, daß** für die Lasterkennung, insbesondere der Erkennung des Akkumulators (3), während dem Deaktivieren des ersten Schaltelementes (10) die Ausgangsspannung an den Ausgangsklemmen (7, 8) von dem Energieversorgungsgerät (1) um einen Betrag, insbesondere 1V bis 5V, erhöht wird, worauf von der Steuervorrichtung (11) die Ansteuerung des zweiten Schaltelementes (18) aufgehoben wird, wodurch bei angeschlossenem Verbraucher (9), insbesondere Akkumulator (3), eine Spannungsindizierung am Steueranschluß (21) des zweiten Schaltelementes (18) erreicht wird und somit das zweite Schaltelement (18) aufgrund der Selbsthaltefunktion aktiviert bleibt und dies von der Steuervorrichtung (11) erkannt wird.

17. Verfahren nach einem oder mehreren der vorhergehenden Ansprüche, **dadurch gekennzeichnet, daß** von der Steuervorrichtung (11) das Deaktivieren des ersten Schaltelementes (10) erkannt wird, indem über einen Steuereingang (22) der Schaltvorrichtung (11) bei Aktivierung des zweiten Schaltelementes (18) erkannt wird, daß die an dem Steueranschluß (14) des ersten Schaltelementes (10) anliegende Spannung gegen das negative Potential gezogen wird.

18. Verfahren nach einem oder mehreren der vorhergehenden Ansprüche, **dadurch gekennzeichnet, daß** die elektronische Schaltung des Energieversorgungsgerätes (1) alternativ ausgehend vom positiven Potential, insbesondere einer Ausgangsklemme (7), verwendet wird.

## Claims

1. Power supply device (1), in particular a charger (2), preferably for accumulators (3) or external voltage sources, which is connected via input terminals (4, 5) to a power source (6) and the supplied power is converted from any voltage, in particular an AC voltage, into a DC voltage and this converted power is forwarded via output terminals (7, 8) to a consumer (9) which can be connected thereto, in particular the accumulator (3), a switching element (10) being provided as a means of operating polarity reversal protection is connected to an output terminal (8) and a negative potential of the power supply device (1), and if a correct, negative polarity of the external voltage source appears at the output terminal (8) via the switching element (10), a connection is established between the output terminal (8) and the negative potential of the power supply device (1) and if an incorrect, positive polarity of the external voltage source appears at the output terminal (8), this connection is interrupted via the switching element (10), **characterised in that** the control terminal (14), in particular the gate terminal, of the first switching element (10), can be connected to a terminal (17), in particular a collector terminal, of another switching element (18) to which the negative potential of the power supply device (1) can be connected, and the control terminal (14) of the first switching element (10) is connected to a control input (22) of a control device (11) of the power supply device (1), and the control terminal (14) of the first switching element (10) is connected to a positive potential, in particular, of a supply voltage source (16), preferably via a resistor (15), so that if an incorrect positive polarity appears at the output terminal (8) or too high a current is flowing across a line connection, in particular a resistor (20), between the output terminal (8) and a control terminal (21) of the other switching element (18), the other switching element (18) is activated or remains so by the applied voltage, as a result of which the first switching element (10) is deactivated or remains so due to the connection via the switching element (18) between the supply voltage source (16) and the negative potential of the power supply device (1), so that the switched state of the first switching element (10) is determined by the switched state of the other switching element (18), and in order to activate the other switching element (18), a control output (24) of the control device (11) is also connected to a control terminal (21), in particular the base terminal, of the other switching element (18).

2. Power supply device as claimed in claim 1, **characterised in that** the supply voltage source (16) is provided in the form of the positive potential, in particular the output terminal (7), of power supply device (1).

3. Power supply device as claimed in claim 1 or 2, **characterised in that** the supply voltage source (16) is provided by an output voltage of the power supply device (1).

4. Power supply device as claimed in one or more of the preceding claims, **characterised in that** the supply voltage source (16) is provided by a voltage of a power source that is independent of the power supply device (1).

5. Power supply device as claimed in one or more of the preceding claims, **characterised in that** a terminal (12), in particular the drain terminal, of the first switching element (10) is connected to the output terminal (8) and preferably via a resistor (20) to a control terminal (21), in particular a base terminal, of the second switching element (18).

6. Power supply device as claimed in one or more of the preceding claims, **characterised in that** the control terminal (14), in particular the gate terminal, of the first switching element (10) and/or a terminal (17), in particular a collector terminal, of the second switching element (18) is connected to the control device (11).

7. Power supply device as claimed in one or more of the preceding claims, **characterised in that** the control terminal (14) of the first switching element (10) is connected to the voltage source and is supplied by it with voltage, in particular permanently, so that the switching element (10) is also activated when the power supply device (1) is switched on, even if no consumer (9) is connected.

8. Power supply device as claimed in one or more of the preceding claims, **characterised in that** the control terminal (14) of the first switching element (10) is connected to the output terminal (7) and hence to the output voltage applied thereto, as a result of which the switching element (10) is activated when a consumer (9), in particular the accumulator (3), is connected at the correct polarity across the output terminals (7, 8), even if a power source (6) is not connected to the input terminals (4, 5).

9. Power supply device as claimed in one or more of the preceding claims, **characterised in that** the electronic circuit of the power supply device (1) is alternatively designed for use relating to a positive potential, in particular the output terminal (7).

10. Method of controlling a power supply device (1), in particular a charger (2), preferably for accumulators (3) or external voltage sources, whereby the power supply device (1) is supplied with power by a power source (6) via input terminals (4, 5) and the power supply device (1) converts the supplied power from any voltage, in particular an AC voltage, into a DC voltage and this converted power is forwarded via output terminals (7, 8) to a consumer (9) which can be connected thereto, in particular the accumulator (3), and at least one switching element (10) is provided as a means of protecting the power supply device (1) against polarity reversal and when a correct, negative polarity of the external voltage source is applied to the consumer (9), in particular the accumulator (3), at the output terminal (8) a connection is maintained or established between the output terminal (8) and the negative potential of the power supply device (1) via the switching element (10), whereas if an incorrect, positive polarity of the external voltage source is applied to the consumer (9), in particular the accumulator (3), at the output terminal (8), this connection via the first switching element (10) is switched off or deactivated, **characterised in that** when the power supply device (1) is activated, in other words when the power source (6) is switched on, the switching element (10) for the polarity reversal protection is activated, even if no consumer (9) is connected, and if an incorrect, positive polarity appears at the output terminal (8) or too high a current is flowing across a line connection, in particular a resistor (20), between the output terminal (8) and a control terminal (21)and another switching element (18), the other switching element (18) is activated or remain so, as a result of which the supply voltage (16) applied to a control terminal (14) of the first switching element (10) is applied to the negative potential of the power supply device (1) by the second switching element (18), causing the first switching element (10) to be locked or deactivated.

11. Method as claimed in claim 10, **characterised in that** a polarity reversal protection, an overload protection and a load detection system is run by the power supply device (1).

12. Method as claimed in claim 10 or 11, **characterised in that**, for the purpose of the overload protection system, when the correct polarity of the consumer (9) appears at the output terminals (7, 8) and too high a current flow is passing across the first switching element (10), the latter is deactivated by the second switching element (18).

13. Method as claimed in one or more of the preceding claims, **characterised in that** in order to operate the overload protection, the first switching element (10) is periodically switched on and off until the current flow being established across the first switching element (10) falls below a defined value and the voltage appearing at a control terminal (21), in particular via the resistor (20), of the other switching element (18) also falls below a predefined value, preventing the other switching element (18) from being activated.

14. Method as claimed in one or more of the preceding claims, **characterised in that** when the first switching element (10) is deactivated on expiry of a pre-settable time by a control device (11) of the power supply device (1), the other activated switching element (18) is deactivated and the first switching element (10) is automatically re-activated by the applied voltage.

15. Method as claimed in one or more of the preceding claims, **characterised in that** for the purpose of the load detection system, the control device (11) firstly deactivates the first switching element (10) by activating the second switching element (18) and on expiry of a pre-settable time, activation of the second switching element (18) is terminated, and if a consumer (9) is connected, a voltage is applied to the control terminal (21) of the second switching element (18), as a result of which the first switching element (10) remains deactivated due to the self-holding function and this is detected by the control device (11).

16. Method as claimed in one or more of the preceding claims, **characterised in that** for the purpose of the load detection system, in particular for detecting the accumulator (3), whilst the first switching element (10) is deactivated, the output voltage at the output terminals (7, 8) is increased by the power supply device (1) by a specific amount, in particular 1V to 5V, and the control device (11) terminates activation of the second switching element (18) so that if a consumer (9), in particular an accumulator (3) is connected, a voltage appears at the control terminal (21) of the second switching element (18) and the second switching element (18) therefore remains active on the basis of the self-holding function, and this is detected by the control device (11).

17. Method as claimed in one or more of the preceding claims, **characterised in that** the control device (11) detects that the first switching element (10) has been deactivated and the second switching element (18) activated via a control input (22) of the switching device (11) and the voltage appearing at the control terminal (14) of the first switching element (10) is applied to the negative potential.

18. Method as claimed in one or more of the preceding claims, **characterised in that** the electronic circuit of the power supply device (1) is alternatively used based on the positive potential, in particular of an output terminal (7).

## Revendications

1. Appareil d'alimentation en énergie (1), en particulier chargeur (2), de préférence pour des batteries (3) ou des sources de tension extérieure, qui est relié par des bornes d'entrée (4, 5) à une source d'énergie (6) et convertit l'énergie amenée d'une tension quelconque, en particulier une tension alternative, en une tension continue et envoie cette énergie convertie au moyen de bornes de sortie (7, 8) à un consommateur (9) pouvant être relié à celles-ci, en particulier, la batterie (3), un premier élément de commutation (10) étant disposé pour une polarisation, qui est relié à une borne de sortie (8) et un potentiel négatif de l'appareil d'alimentation en énergie (1), et en ce que, en cas d'application d'une polarité correcte et négative de la source d'alimentation extérieure sur la borne de sortie (8), une liaison est commutée au moyen du premier élément de commutation (10) entre la borne de sortie (8) et le potentiel négatif de l'appareil d'alimentation d'énergie (1), et, en cas d'application d'une polarité incorrecte et positive de la source d'alimentation extérieure sur la borne de sortie (8), cette liaison est interrompue par le premier élément de commutation (10), **caractérisé en ce que** le branchement de commande (14), en particulier le branchement de porte, du premier élément de commutation (10) est relié à un branchement (17), en particulier un branchement de collecteur, d'un autre élément de commutation (18), sur lequel le potentiel négatif de l'appareil d'alimentation en énergie (1) peut être branché, et **en ce que** le branchement de commande (14) du premier élément de commutation (10) est relié à une entrée de commande (22) d'un dispositif de commande (11) de l'appareil d'alimentation d'énergie (1) et **en ce que** le branchement de commande (14) du premier élément de commutation (10) est relié à un potentiel, en particulier positif, d'une source de tension d'alimentation (16), de préférence au moyen d'une résistance (15), de sorte que, dans le cas d'une polarité correcte et positive sur la borne de sortie (8) ou d'un flux de courant trop élevé au moyen d'une liaison de ligne, en particulier une résistance (20), entre la borne de sortie (8) et un branchement de commande (21) de l'autre élément de commutation (18), l'autre élément de commutation (18) est activé par la tension amenée ou reste activé, de sorte que le premier élément de commutation (10) est désactivé ou reste désactivé en raison de la liaison commutée par l'autre élément de commutation (18) entre la source de tension d'alimentation (16) et le potentiel négatif de l'appareil d'alimentation en énergie (1) et de ce fait l'état de commutation du premier élément de commutation (10) est déterminé par l'état de commutation de l'autre élément de commutation (18) et **en ce que** d'autre part, pour l'activation de l'autre élément de commutation (18), une sortie de commande (24) du dispositif de commande (11) est reliée au branchement de commande (21), en particulier, le branchement de base, de l'autre élément de commutation (18).

2. Appareil d'alimentation en énergie selon la revendication 1, **caractérisé en ce que** la source de tension d'alimentation (16) est formée par le potentiel positif, en particulier la borne de sortie (7), de l'appareil d'alimentation en énergie (1).

3. Appareil d'alimentation en énergie selon la revendication 1 ou 2, **caractérisé en ce que** la source de tension d'alimentation (16) est formée par une tension de sortie de l'appareil d'alimentation en énergie (1).

4. Appareil d'alimentation en énergie selon l'une quelconque ou plusieurs des revendications précédentes, **caractérisé en ce que** la source de tension d'alimentation (16) est formée par une tension d'une source d'énergie indépendante de l'appareil d'alimentation en énergie (1).

5. Appareil d'alimentation en énergie selon l'une quelconque ou plusieurs des revendications précédentes, **caractérisé en ce qu'**un branchement (12), en particulier le branchement du drain, du premier élément de commutation (10) est relié à la borne de sortie (8) et de préférence au moyen d'une résistance (20) à un branchement de commande (21), en particulier un branchement de base, du second élément de commutation (18).

6. Appareil d'alimentation en énergie selon l'une quelconque ou plusieurs des revendications précédentes, **caractérisé en ce que** le branchement de commande (14), en particulier le branchement de porte, du premier élément de commutation (10) et/ou un branchement (17), en particulier un branchement de collecteur, du second élément de commutation (18) est relié au dispositif de commande (11).

7. Appareil d'alimentation en énergie selon l'une quelconque ou plusieurs des revendications précédentes, **caractérisé en ce que** le branchement de commande (14) du premier élément de commutation (10) est relié à la source de tension et est alimenté par celle-ci, en particulier de manière durable, avec une tension, l'élément de commutation (10) étant activé lors de la mise en service de l'appareil d'alimentation en énergie (1) même sans consommateur (9) raccordé.

8. Appareil d'alimentation en énergie selon l'une quelconque ou plusieurs des revendications précédentes, **caractérisé en ce que** le branchement de commande (14) du premier élément de commutation (10) est relié à la borne de sortie (7) et donc à la tension de sortie appliquée sur cette borne, l'élément de commutation (10) étant activé en cas de branchement d'un consommateur (9), en particulier de la batterie (3), sur les bornes de sortie (7, 8) avec une polarité correcte également sans source d'énergie (6) raccordée sur les bornes d'entrée (4, 5).

9. Appareil d'alimentation en énergie selon l'une quelconque ou plusieurs des revendications précédentes, **caractérisé en ce que** la structure du circuit électronique de l'appareil d'alimentation en énergie (1) est conçue de façon alternative pour une utilisation rapportée au potentiel positif, en particulier de la borne de sortie (7).

10. Procédé pour commander un appareil d'alimentation en énergie (1), en particulier un chargeur (2), de préférence pour des batteries (3) ou des sources de tension extérieure dans lequel l'appareil d'alimentation en énergie (1) est alimenté en énergie par une source d'énergie (6) au moyen de bornes d'entrée (4, 5), l'appareil d'alimentation en énergie (1) convertissant l'énergie amenée d'une tension quelconque, en particulier une tension alternative, en une tension continue et envoyant cette énergie convertie au moyen de bornes de sortie (7, 8) à un consommateur (9) pouvant être relié à ces bornes, en particulier la batterie (3), et en ce que, pour une polarisation de l'appareil d'alimentation en énergie (1), au moins un premier élément de commutation (10) est utilisé et en ce que, en cas d'application du consommateur (9), en particulier de la batterie (3), avec une polarité correcte et négative de la source de tension extérieure sur la borne de sortie (8), une liaison entre la borne de sortie (8) et le potentiel négatif de l'appareil d'alimentation en énergie (1) reste connectée ou est connectée au moyen du premier élément de commutation (10) alors que, pendant l'application du consommateur (9), en particulier de la batterie (3), avec une polarité incorrecte et positive de la source de tension extérieure sur la borne de sortie (8), cette liaison est déconnectée ou désactivée par le premier élément de commutation (10), **caractérisé en ce que**, en cas d'activation de l'appareil d'alimentation en énergie (1), donc lors du raccordement à la source d'énergie (6) même sans consommateur (9) raccordé, le premier élément de commutation (10) est activé pour la polarisation, **en ce que**, avec une polarité erronée et positive sur la borne de sortie (8) ou d'un flux de courant trop élevé par une liaison de ligne, en particulier une résistance (20), entre la borne de sortie (8) et un branchement de commande (21) d'un autre élément de commutation (18), l'autre élément de commutation (18) est activé ou reste activé par la tension amenée, la tension d'alimentation (1) appliquée sur un branchement de commande (14) du premier élément de commutation (10) étant tirée par l'autre élément de commutation (10) vers le potentiel négatif de l'appareil d'alimentation en énergie et le premier élément de commutation (10) étant de ce fait bloqué ou désactivé.

11. Procédé selon la revendication 10, **caractérisé en ce qu'**une polarisation, une protection de surcharge et une détection de charge sont effectuées par l'appareil d'alimentation en énergie (1).

12. Procédé selon la revendication 10 ou 11, **caractérisé en ce que**, en cas de protection de surcharge, avec une polarité correcte du consommateur (9) sur les bornes de sortie (7, 8) et avec un flux de courant trop élevé sur le premier élément de commutation (10), celui-ci est désactivé par le second élément de commutation (18).

13. Procédé selon l'une quelconque ou plusieurs des revendications précédentes, **caractérisé en ce que**, lors du fonctionnement pour la protection de surcharge, le premier élément de commutation (10) est connecté et déconnecté périodiquement jusqu'à ce que le flux de courant qui s'établit sur le premier élément de commutation (10) descende au-dessous d'une valeur définie et de ce fait l'application de tension sur un branchement de commande (21), en particulier sur la résistance (20), de l'autre élément de commutation (18) descende également au-dessous d'une valeur prédéfinie, de sorte qu'une activation de l'autre élément de commutation (18) est empêchée.

14. Procédé selon l'une quelconque ou plusieurs des revendications précédentes, de sorte que, avec le premier élément de commutation (10) désactivé, après l'écoulement d'une durée pré-réglable, l'autre élément de commutation (18) activé est désactivé par un dispositif de commande (11) de l'appareil d'alimentation en énergie (1), le premier élément de commutation (10) étant réactivé automatiquement par la tension amenée.

15. Procédé selon l'une quelconque ou plusieurs des revendications précédentes, **caractérisé en ce que**, pour la détection de charge d'abord par le dispositif de commande (11), le premier élément de commutation (10) est désactivé par l'activation du second élément de commutation (18), après quoi, après l'écoulement d'une durée pré-réglable, l'activation du second élément de commutation (18) est supprimée, une tension étant appliquée sur le branchement de commande (21) du second élément de commutation (18) lorsque le consommateur (9) est raccordé, le premier élément de commutation (10) restant désactivé en raison de la fonction d'automaintien et ceci étant détecté par le dispositif de commande (11).

16. Procédé selon l'une quelconque ou plusieurs des revendications précédentes, **caractérisé en ce que**, pour la détection de charge, en particulier de la détection de la batterie (3), la tension de sortie sur les bornes de sortie (7, 8) de l'appareil d'alimentation en énergie (1) étant augmentée d'une valeur, en particulier 1 V jusqu'à 5 V, pendant la désactivation du premier élément de commutation (10), après quoi, l'activation du second élément de commutation (18) est supprimée par le dispositif de commande (11), de sorte que, avec le consommateur (9) branché, en particulier la batterie (3), une application de tension sur le branchement de commande (21) du second élément de commutation (18) est obtenue, et de ce fait que le second élément de commutation (18) reste activé en raison d'une fonction d'automaintien et ceci est détecté par le dispositif de commande (11).

17. Procédé selon l'une quelconque ou plusieurs des revendications précédentes, **caractérisé en ce que** la désactivation du premier élément de commutation (10) est détectée par le dispositif de commande (11) par le fait que, au moyen d'une entrée de commande (22) du dispositif de commutation (11), on détecte en cas d'activation du second élément de commutation (18) que la tension appliquée sur le branchement de commande (14) du premier élément de commutation (10) est tirée vers le potentiel négatif.

18. Procédé selon l'une quelconque ou plusieurs des revendications précédentes, **caractérisé en ce que** le circuit électronique de l'appareil d'alimentation en énergie (1) est utilisé comme alternative à partir du potentiel positif, en particulier d'une borne de sortie (7).
